(19) Europäisches Patentamt
European Patent Office
Office européen des brevets

(11) **EP 2 176 655 B1**

(12) **EUROPÄISCHE PATENTSCHRIFT**

(45) Veröffentlichungstag und Bekanntmachung des Hinweises auf die Patenterteilung:
**21.03.2012   Patentblatt 2012/12**

(21) Anmeldenummer: **08784334.8**

(22) Anmeldetag: **11.07.2008**

(51) Int Cl.:
*G01N 29/04* (2006.01)     *G01N 29/07* (2006.01)
*G01N 29/44* (2006.01)     *G01B 17/02* (2006.01)

(86) Internationale Anmeldenummer:
**PCT/DE2008/001151**

(87) Internationale Veröffentlichungsnummer:
**WO 2009/024111 (26.02.2009 Gazette 2009/09)**

(54) **VERFAHREN ZUR ZERSTÖRUNGSFREIEN PRÜFUNG VON ROHREN**

PROCESS FOR THE DESTRUCTION-FREE TESTING OF PIPES

PROCÉDÉ DE VÉRIFICATION NON DESTRUCTIVE DE TUYAUX

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.08.2007   DE 102007039382**

(43) Veröffentlichungstag der Anmeldung:
**21.04.2010   Patentblatt 2010/16**

(73) Patentinhaber: **V & M Deutschland GmbH**
**40472 Düsseldorf (DE)**

(72) Erfinder:
• **GROOS, Andreas**
**47509 Rheurdt (DE)**

• **NITSCHE, Stefan**
**45475 Mülheim (DE)**

(74) Vertreter: **Meissner, Peter E.**
**Meissner & Meissner**
**Patentanwaltsbüro**
**Hohenzollerndamm 89**
**14199 Berlin (DE)**

(56) Entgegenhaltungen:
WO-A-03/016897     US-A- 4 641 531
US-A- 4 669 312     US-A- 5 085 082

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur zerstörungsfreien Prüfung von Rohren gemäß dem Oberbegriff des Patentanspruches 1.

Zerstörungsfreie Verfahren zur Prüfung von metallischen Rohren auf Oberflächenfehler, wie z. B. die Wirbelstromprüfung oder Ultraschallprüfung, sind seit langem bekannt und bewährt.

Siehe z.B. US 5 085 082.

Die Ultraschallprüfung wird z. B. angewandt um produktionsbegleitend insbesondere die Einhaltung der geforderten Wanddicke des Rohres zu überprüfen und eventuell vorhandene Ungänzen in der Rohrwand, wie Dopplungen, Risse, Kerben, Einwalzungen oder sonstige Oberflächenfehler zu detektieren.

Bei der Prüfung werden nach dem Puls-Echoverfahren ausgehend von der Rohraußenoberfläche Ultraschallimpulse in der Wand angeregt und die von der Rohrinnenoberfläche reflektierten Signale wieder empfangen.

Aus der Laufzeit des Signals und aus der Schallgeschwindigkeit im zu prüfenden Material lässt sich die Dicke der Rohrwand berechnen. Üblicherweise wird dieses Verfahren produktionsbegleitend und automatisiert sowohl für magnetisierbare und nicht magnetisierbare Rohrwerkstoffe eingesetzt.

Hierbei wird das Rohr über die gesamte Rohrlänge umfangsgenau abgetastet und dabei neben der Ermittlung der Wanddicke (WD) und dem Außendurchmesser ($D_a$) die Innen- und Außenoberfläche des Rohres auf Fehler untersucht.

Als zusätzliches oder alternatives Verfahren zur Detektion von Oberflächenfehlern wird auch die bekannte Streuflussprüfung verwendet. Die insbesondere für die Detektion von Außenfehlern an der Rohrwand verwendete Gleichfeld-Streuflussprüfung wird bei Rohren aus ferromagnetischem Stahl angewendet, um längsorientierte, oberflächennahe Ungänzen, wie z. B. Risse, Schalen oder Beulen zu detektieren.

Diese bekannten zerstörungsfreien Prüfmethoden erlauben die Messung von Wanddicken und Durchmesser sowie die Fehlerprüfung umfangsgenau über die gesamte Rohrlänge mit hoher Auflösung von wenigen Zentimetern.

Bei der Auswertung der Messwerte wird geprüft, ob eine bestimmte vorgegebene Fehlerschwelle von x% der nominellen Wanddicke (Referenzfehlertiefe, RFT) nicht überschritten wurde.

Im Rahmen einer kontinuierlichen Fertigung z. B. von nahtlos hergestellten Rohren, müssen die bei der Fehlerprüfung erkannten und am Rohr markierten Fehler ausgebessert werden, was üblicherweise produktionsbegleitend durch ein Ausschleifen oder Ausfräsen des Fehlers passiert.

Hierbei sind allerdings entsprechende Vorgaben zu beachten, da eine bestimmte Mindestwanddicke nicht unterschritten werden darf.

Bislang wurden zunächst die erkannten Fehler an dem betreffenden Rohr außen- oder innenseitig ausgeschliffen und das Rohr anschließend nochmals durch die Prüfeinrichtungen gefahren, um zum einen zu detektieren, ob nunmehr Fehlerfreiheit vorhanden ist und zum anderen, ob die erforderliche Mindestwanddicke im nachgearbeiteten Fehlerbereich eingehalten wurde und die Freigabe des Rohres erfolgen kann.

Diese Verfahrensweise hat den Nachteil, dass erst nach der mechanischen Bearbeitung und der anschließenden erneuten Prüfung erkannt wird, ob das Rohr fehlerfrei ist und an der nachgearbeiteten Stelle noch die erforderliche Mindestwanddicke aufweist, oder ob es entsprechend gekürzt und im Extremfall sogar verschrottet werden muss.

Dieser nachteilige Umstand entsteht durch die Problematik, dass im Rahmen eines kontinuierlichen Fertigungsprozesses eine manuelle Restwanddickenbestimmung nicht oder nur mit großem Aufwand möglich ist.

Zwar ist es grundsätzlich möglich beispielsweise bei diskontinuierlicher Fertigung, bei der die Arbeitsgeschwindigkeit eher nebensächlich ist, an einer Fehlstelle eine manuelle Ultraschall-(US-) Wanddickenmessung durchzuführen, um zu bestimmen, ob eine Nacharbeit im Hinblick auf die einzuhaltende Mindestwanddicke sinnvoll ist.

Dies erfordert einerseits einen erheblichen Zeitaufwand, der bei einer kontinuierlich arbeitenden modernen Fertigungslinie inakzeptabel ist, andererseits wird außerdem noch zusätzliches qualifiziertes Personal benötigt, um derartige Messungen durchzuführen.

Aufgabe der Erfindung ist es, ein sicheres und kostengünstiges Verfahren zur zerstörungsfreien Prüfung von Rohren z. B. mittels Ultraschall und/oder Streufluss anzugeben, mit dem ohne Durchführung einer manuellen Nachprüfung bereits vor der Bearbeitung eines festgestellten Fehlers am Rohr sicher festgestellt werden kann, ob die verbliebene Restwanddicke für eine Bearbeitung des Rohres im Fehlerbereich noch ausreichend ist.

Erfindungsgemäß wird diese Aufgabe entsprechend den Merkmalen des Anspruches 1 gelöst.

Bei dem erfindungsgemäßen Prüfverfahren wird das Rohr über die gesamte Rohrlänge umfangsgenau abgetastet und dabei neben der Ermittlung der Wanddicke (WD) und des Außendurchmessers ($D_a$), die Innen- und Außenoberfläche des Rohres auf Fehler untersucht.

Die ermittelten Fehler werden mit einer vorgegebenen zulässigen Referenzfehlertiefe RFT (RFT = Fehlerschwelle von x% der nominellen Wanddicke) verglichen und bei Überschreitung der Fehlerschwelle einer Nacharbeit zugeführt, wobei nach der Bearbeitung in diesem Bereich die geforderte Mindestwanddicke ($WD_{min}$) vorhanden sein muss.

Die Freigabe zur Nacharbeit erfolgt erfindungsgemäß erst dann, wenn folgende Bedingungen erfüllt sind:

- WD - RFT > WD $_{min}$ für Fehler an der Innen- und Außenseite des Rohres und
- $D_a$ - RFT > $D_{a\ min}$ für Fehler an der Außenseite des Rohres.

Der Vorteil des erfindungsgemäßen Verfahrens liegt darin, dass nun produktionsbegleitend im Rahmen der zerstörungsfreien Prüfung der Rohre bereits während der Prüfung oder im unmittelbaren Anschluss festgestellt werden kann, ob die Nacharbeit eines Fehlers im Hinblick auf die einzuhaltende Mindestwanddicke sinnvoll ist.

Durch dieses frühzeitige Erkennen und Ausschleusen nicht mehr nacharbeitsfähiger Rohre lassen sich die sonst entstehenden Kosten aufgrund unnötiger Nacharbeiten und überflüssiger Prüfungen sicher vermeiden.

Falls die Fehlererkennung und Fehlerbearbeitung in getrennten Produktionslinien erfolgt, ist in einer vorteilhaften Weiterbildung der Erfindung vorgesehen, einen abgestimmten Koordinatennullpunkt auf dem Rohr zu markieren, um in der Bearbeitungsstation eine korrekte Zuordnung des Fehlers an der Rohroberfläche zu ermöglichen. Dasselbe gilt für den Fall, dass die Ermittlung von Wanddicke/Außendurchmesser und Fehlerprüfung in separaten Linien erfolgt.

Nachfolgend wird die Erfindung anhand zweier Verfahrensvarianten näher beschrieben:

**Variante 1:**

An jedem Punkt der Rohroberfläche sind Wanddicke (WD) und Außendurchmesser ($D_a$) durch die zerstörungsfreien Messungen bekannt. Wird jetzt bei eingestellter Fehlerschwelle von x % der nominellen Wanddicke (RFT, Referenzfehlertiefe) die Fehlerschwelle überschritten, wird geprüft, ob folgende Bedingungen erfüllt sind:

- WD - RFT > WD min für Fehler an der Innen- und Außenseite
- $D_a$- RFT > $D_a$ min für Fehler an der Außenseite

Ist dies der Fall, wird das Rohr zur Fehlerbearbeitung freigegeben.

Sind die Bedingungen nicht erfüllt, wird die betreffende Stelle gesondert markiert, und nicht weiter bearbeitet, denn bei einer Nacharbeit würden Wanddicke und/oder Außendurchmesser außerhalb des Toleranzbereiches liegen.

Wenn die Wanddicke des Rohres nur noch annähernd die Mindestwanddicke aufweist, können in diesen Bereichen auch Anzeigen unterhalb der Referenzfehlerschwelle weiter ausgewertet werden. Liegt dann die berechnete "fehlerfreie Restwanddicke" unterhalb der minimalen Wanddicke (WD min) ist das Rohr zu verwerfen.

**Variante 2:**

Bei dieser Variante wird angenommen, dass in erster Näherung die Fehlertiefe und die Fehleramplitude linear zusammenhängen. An jedem Punkt der Rohroberfläche sind Wanddicke (WD) und Außendurchmesser ($D_a$) bekannt.

Wird jetzt bei eingestellter Fehlerschwelle von x % der nominellen Wanddicke (RFT= Referenzfehlertiefe, AFT= Fehlertiefe, berechnet aus (Fehleramplitude der aktuellen Anzeige)/(Amplitude des Referenzfehlers) x (Tiefe des Referenzfehlers), die Fehlerschwelle überschritten, wird geprüft, ob folgende Bedingungen erfüllt sind:

- WD-AFT > WD min für Fehler an der Innen- und Außenseite
- $D_a$ - AFT > $D_a$ min für Fehler an der Außenseite

Ist dies der Fall, wird das Rohr zur Fehlerbearbeitung freigegeben.

Ist die Bedingung nicht erfüllt, wird die betreffende Stelle gesondert markiert, und nicht weiter bearbeitet, da bei einer Nacharbeit Wanddicke oder Außendurchmesser außerhalb des Toleranzbereiches liegen würden.

Nach einer vorteilhaften Weiterbildung der Erfindung kann das Verfahren noch weiter optimiert werden. Wenn an einer Stelle mit Fehlerschwellenüberschreitung eine der oberen Bedingungen noch erfüllt ist (d. h. Restwanddicke/Außendurchmesser sind noch i. O.), wird am Nachbearbeitungsplatz angezeigt, wie viel von der Wanddicke noch abgetragen werden kann, bevor das Rohr aus den zulässigen Toleranzen (WD min, $D_a$ min) fällt.

In einer vorteilhaften Ausgestaltung der Erfindung kann die anschließende Fehlerbearbeitung an den Rohren automatisiert erfolgen.

Bei Feststellung eines nachzuarbeitenden Fehlers wird mittels eines vollautomatischen Bearbeitungs-Systems an der Fehlstelle höchstens bis zur Mindesttoleranzgrenze (WD min, $D_a$ min) durch Schleifen, Fräsen, etc. Material abgetragen, und anschließend das Rohr in der Prüfstation erneut geprüft.

Die wesentlichen Merkmale des erfindungsgemäßen Verfahrens lassen sich wie folgt zusammenfassen:

- hochauflösende Ermittlung der Wanddicke/des Außendurchmessers und der Fehlertiefe,

- Zuordnung dieser Messwerte über die Ortskoordinaten,
- Berechnung von Restwanddicke/Restaußendurchmesser auf Basis folgender Annahmen:

  o Fehlertiefe proportional zur Fehleramplitude mindestens im Bereich um die zur Einstellung verwendete Referenzfehlertiefe herum (z. B. für Verfahren wie Ultraschall, Streufluss, Wirbelstrom, etc.).
  o Alternativ wird zumindest davon ausgegangen, dass eine natürlich Fehlstelle, deren Amplitude die Referenzfehler-Schwelle erreicht/überschreitet, mindestens dieselbe Fehlertiefe wie der Referenzfehler aufweist.

- Automatische Entscheidung über Reparatur/Verschrottung auf Basis vorstehender Kriterien.
- Die Vorteile der Erfindung sind zusammengefasst:
- verminderter Reparatur- und Prüfaufwand ,
- höhere Durchsatzleistung in der Adjustage,
- Möglichkeit der vollständigen Automatisierung des Fehlerbearbeitungsprozesses.

**Patentansprüche**

1. Verfahren zur zerstörungsfreien Prüfung von metallischen Rohren, insbesondere von nahtlos hergestellten Rohren aus Stahl, bei dem das Rohr über die gesamte Rohrlänge umfangsgenau abgetastet und dabei neben der Ermittlung der Wanddicke (WD) und des Außendurchmessers ($D_a$), die Innen- und Außenoberfläche des Rohres auf Fehler untersucht und die dabei ermittelten Fehler mit einer vorgegebenen zulässigen Referenzfehlertiefe RFT (RFT = Fehlerschwelle von x % der nominellen Wanddicke) verglichen und die Rohre bei Überschreitung der Fehlerschwelle einer Nacharbeit zugeführt werden und nach der Bearbeitung im nachgearbeiteten Bereich eine geforderte Mindestwanddicke ($WD_{min}$) vorhanden sein muss,
   **dadurch gekennzeichnet,**
   **dass** die mit Fehlern behafteten Rohre erst zur Nacharbeit freigegeben werden, wenn zuvor in einem Auswerteschritt die ermittelten geometrischen Kenngrößen in Beziehung zueinander gesetzt werden und folgende Bedingungen erfüllt sind:

   • WD - RFT > $WD_{min}$ für Fehler an der Innen- und Außenseite des Rohres und
   • $D_a$ - RFT > $D_{a\,min}$ für Fehler an der Außenseite des Rohres.

2. Verfahren nach Anspruch 1
   **dadurch gekennzeichnet,**
   **dass** unter Annahme eines linearen Zusammenhangs zwischen der gemessenen Fehler-(Anzeigen-) amplitude und der realen Fehlertiefe eine Fehlertiefe AFT nach folgender Formel errechnet wird:

   $$AFT = \text{(Fehleramplitude der aktuellen Anzeige)}/\text{(Amplitude des Referenzfehlers)} \times \text{(Tiefe des Referenzfehlers)}$$

   und die mit Fehlern behafteten Rohre erst dann zur Nacharbeit freigegeben werden,
   wenn folgende Bedingungen erfüllt sind:

   • WD - AFT > $WD_{min}$ für Fehler an der Innen- und Außenseite des Rohres und
   • $D_a$ - AFT > $D_{a\,min}$ für Fehler an der Außenseite des Rohres

3. Verfahren nach Anspruch 1 und 2
   **dadurch gekennzeichnet,**
   **dass** die Freigabe der Rohre automatisiert erfolgt.

4. Verfahren nach einem der Ansprüche 1 - 3
   **dadurch gekennzeichnet,**
   **dass** die mit Fehlern behafteten Rohre bei der zerstörungsfreien Prüfung jeweils mit einem den jeweiligen Fehlerort eindeutig lokalisierenden Koordinatennullpunkt versehen werden.

**Claims**

1. A method for the non-destructive testing of metal pipes, in particular steel pipes manufactured without seams, in which the pipe is scanned in a circumferentially exact manner over the entire pipe length and in the process in addition to determination of the wall thickness (WD) and the external diameter ($D_a$), the inner and outer surface of the pipe are examined for defects and the defects determined in the process are compared with a pre-determined permissible reference defect depth RFT (RFT = defect threshold of x % of the nominal wall thickness) and the pipes are supplied to a further processing when the defect threshold is exceeded and after the machining a required minimum wall thickness ($WD_{min}$) must be present in the further-processed region, **characterised in that** the pipes having defects are only released for further processing when beforehand the determined geometric characteristic measurements are placed in relation to one another in an evaluation step and the following conditions are met:

   • WD - RFT > $WD_{min}$ for defects at the inside and outside of the pipe and
   • $D_a$- RFT > $D_{amin}$ for defects at the outside of the pipe.

2. A method according to claim 1, **characterised in that** assuming a linear relationship between the measured defect (reading) amplitude and the actual defect depth, a defect depth AFT is calculated according to the following formula:

$$AFT = (\text{defect amplitude of the current reading})/\ (\text{amplitude of the reference defect}) \times (\text{depth of the reference defect})$$

   and the pipes having defects are only released for further processing when the following conditions are met:

   • WD - AFT > $WD_{min}$ for defects at the inside and outside of the pipe and
   • $D_a$ - AFT > $D_{a\ min}$ for defects at the outside of the pipe

3. A method according to claim 1 and 2, **characterised in that** the release of the pipes takes place in an automated manner.

4. A method according to any one of claims 1 - 3, **characterised in that** upon non-destructive testing, the pipes having defects are in each case provided with a coordinate origin clearly fixing the position of the respective defect location.

**Revendications**

1. Procédé d'essai non destructif de tubes métalliques, en particulier de tubes en acier fabriqués sans soudure, dans lequel le tube est analysé avec précision sur la circonférence sur toute sa longueur et, en l'occurrence, en dehors de la détermination de l'épaisseur de paroi (WD) et du diamètre externe ($D_a$), on examine la surface interne et la surface externe du tube pour rechercher des défauts et les défauts qui y sont déterminés sont comparés à une profondeur du défaut de référence RFT (RFT = seuil de défaut de x % de l'épaisseur de paroi nominale) autorisée prédéfinie et les tubes, lorsqu'ils dépassent le seuil de défaut, sont acheminés à un poste de retouche et, après usinage dans la zone retouchée, une épaisseur de paroi minimale exigée ($WD_{min}$) doit être présente, **caractérisé en ce que**
   les tubes ayant des défauts ne sont autorisés à être retouchés que si, auparavant, dans une étape d'exploitation, les grandeurs caractéristiques géométriques déterminées sont mises en rapport l'une avec l'autre et remplissent les conditions suivantes :

   • WD - RFT > $WD_{min}$ pour des défauts sur la face interne et la face externe du tube, et
   • $D_a$ - RFT > $D_{a\ min}$ pour des défauts sur la face externe du tube.

2. Procédé selon la revendication 1,
   **caractérisé en ce que**,
   en supposant une relation linéaire entre l'amplitude (indicatrice) de défauts et la profondeur réelle des défauts, on calcule une profondeur de défauts AFT en fonction de la formule suivante :

```
AFT = (amplitude de défauts de l'indication actuelle)/

    (amplitude du défaut de référence) x (profondeur

        du défaut de référence)
```

et les tubes ayant des défauts ne sont ensuite autorisés pour la retouche que lorsque les conditions suivantes sont remplies :

- WD - AFT > WD $_{min}$ pour les défauts sur la face interne et la face externe du tube, et
- $D_a$ - AFT > $D_{a\ min}$ pour les défauts sur la face externe du tube.

3. Procédé selon les revendications 1 et 2, **caractérisé en ce que**
   la libération des tubes se fait de manière automatique.

4. Procédé selon l'une quelconque des revendications 1 à 3,
   **caractérisé en ce que**
   les tubes entachés de défauts sont pourvus, lors de l'essai non destructif, respectivement, d'un point zéro de coordonnées localisant clairement le point défectueux respectif.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5085082 A